# DEMANDE DE BREVET EUROPEEN

(11) **EP 4 628 691 A1**
(43) Date de publication de la demande: **08.10.2025**
(21) Numéro de dépôt: 25166454.6
(22) Date de dépôt: 26.03.2025
(51) Int. Cl.: E05C 21/00, F16B 21/02

(54) **DISPOSITIF DE RETENUE TEMPORAIRE D'UN OUVRANT DE CAROSSERIE**

(30) Priorité: 29.03.2024 FR 2403234
(71) Demandeur: Microplast, 94520 Perigny-sur-Yerres (FR)
(72) Inventeur: GAGNON, Barthélémy, 77690 Cugny (FR)
(74) Mandataire: Novagraaf Technologies

(57) **Abrégé**

L'invention propose un dispositif (10) de retenue temporaire apte à être fixé sur une paroi comportant une lumière oblongue (300) délimitée par deux bords (302) distants d'une largeur déterminée (L1), le dispositif (10) un moyeu (M) de fixation comportant un tronçon formant socle (T1), un tronçon intermédiaire reçu dans la lumière oblongue (300) et un tronçon de butée (T3) pour retenir axialement le moyeu (M) de fixation, caractérisé en ce que le tronçon intermédiaire de section polygonale complémentaire de la lumière oblongue (300) est compressible radialement par déformation élastique pour permettre la passage de l'une à l'autre de deux positions angulaires décalées du moyeu (M) de fixation.

## Description

### Domaine technique de l'invention

L'invention concerne un dispositif pour la retenue temporaire, notamment en position fermée, d'un élément ouvrant de carrosserie par rapport à un élément support tel qu'un dormant.

L'invention concerne plus particulièrement un dispositif de fermeture provisoire d'une porte ou d'un élément mobile notamment d'un véhicule automobile, par exemple d'un hayon ou d'un capot, par rapport à un élément structurel fixe tel que la caisse ou la carrosserie du véhicule.

### Arrière-plan technique de l'invention

De manière connue, dans le domaine automobile, les quatre étapes principales de fabrication d'un véhicule se composent de l'emboutissage, de l'assemblage de la tôlerie, de l'application de la peinture et du montage final.

Pendant l'application de la peinture, des outillages, destinés à maintenir les ouvrants en position lors du passage en peinture, sont installés sur la caisse du véhicule, puis sont démontés après le passage en peinture.

Parmi ces outils, les dispositifs de retenue temporaire des portes du véhicule sont montés sur la caisse afin de maintenir les portes en position et de les empêcher de s'ouvrir pendant l'application de la peinture. Ces dispositifs peuvent être montés lors de l'étape de l'assemblage de tôlerie ou au début de l''étape d'application de la peinture.

De tels dispositifs de retenue connus comprennent un corps ou platine de fixation destiné(e) à être fixé(e) par exemple sur le dormant, et un élément porté par le corps et formant une butée apte coopérer avec une portion de l'élément ouvrant pour retenir ce dernier.

Dans l'exemple d'une porte de véhicule, l'élément structurel dormant de support est le cadre structurel de porte et l'élément ouvrant est la porte du véhicule. Dans ce cas, le dispositif de retenue temporaire est par exemple disposé au niveau auquel se trouvera la gâche de la serrure de porte qui sera installée ultérieurement lors de l'assemblage dans l'atelier montage.

Concernant la conception des moyens de fixation du dispositif, le document FR3007056A1 propose un dispositif de fermeture provisoire d'un élément ouvrant sur une paroi d'un élément support comportant une lumière oblongue, le dispositif comprenant un corps comportant des moyens de retenue de l'ouvrant et des moyens de fixation sur l'élément support comportant :
- un socle solidaire d'un corps et aptes à venir en butée contre la face extérieure de la paroi dans la position de verrouillage du dispositif ;
- et au moins un verrou monté mobile élastiquement par rapport au corps entre deux positions,
le dispositif présentant, en position insérée, un degré de mobilité en pivotement, le verrou étant amené élastiquement dans une position verrouillée lorsque le dispositif est amené dans sa position de verrouillage.

Le verrou est solidaire du socle au moyen d'une zone souple formée d'une languette élastique flexible.

Selon une telle configuration le dispositif de fermeture provisoire de l'élément ouvrant sur l'élément support peut être verrouillé par une simple action manuelle sur celui-ci, mais pour procéder à son déverrouillage, il faut agir sur le verrou, puis manipuler le dispositif pour le faire à nouveau pivoter puis l'extraire axialement.

Afin de garantir le verrouillage effectif à l'issue de la manœuvre de mise en place et de verrouillage du dispositif, le verrou constitue un élément de conception et de fabrication complexes et il impose une manipulation complexe en vue de réaliser le déverrouillage.

De plus encore, le type de dispositif de retenue selon l'invention, lorsqu'il est mis en œuvre sous contrainte et pendant une étape d'un process de peinture, est amené à subir des températures élevées de l'ordre de 160 à 190 degrés Celsius au sein d'étuves. De telles période de « chauffage » nécessitent une conception du dispositif qui en garantisse la parfaite tenue mécanique malgré les phénomènes de fluage de la matière plastique dans laquelle il est réalisé.

Ainsi, par exemple dans le cas de la conception proposée dans le document FR2943088, sous cet effet de fluage de la matière, l'effet de « pincement » axial du rebord résultant de la présence de la nervure se trouve réduit, voir annulé, en ayant pour conséquence que le positionnement et la fixation de l'embase ne sont plus assurés de manière fiable et le résultat obtenu ne permet pas de garantir une position angulaire déterminée de « verrouillage ».

L'invention vise à proposer un dispositif dont les moyens de fixation sont de conception simple et fiable et permettent notamment de s'affranchir de la présence d'un verrou mobile et de remédier aux problèmes inhérents aux différentes conceptions de l'art antérieur concernant la qualité, la simplicité et la fiabilité du verrouillage.

### Résumé de l'invention

L'invention propose un dispositif pour la retenue temporaire d'un deuxième élément d'un véhicule automobile monté mobile par rapport à un premier élément de ce véhicule automobile, le deuxième élément comprenant une paroi comportant une face intérieure et une face extérieure et une lumière oblongue délimitée par deux bords rectilignes parallèles distants transversalement d'une largeur déterminée, le dispositif comportant :
- un corps comportant des moyens de retenue du deuxième élément ; et
- un moyeu de fixation de forme allongée qui s'étend depuis le corps, qui, selon un axe de référence, est apte à être introduit axialement à travers la lumière oblongue pour occuper une position axiale insérée dans laquelle le moyeu de fixation est apte à pivoter autour dudit axe de référence entre une position angulaire d'insertion et une position angulaire de fixation qui sont décalées angulairement l'une par rapport à l'autre,
ce moyeu de fixation comportant axialement et successivement :
-- un tronçon formant socle qui est apte à venir en appui axial contre la face extérieure du deuxième élément lorsque le moyeu de fixation est dans sa position axiale insérée ;
-- un tronçon intermédiaire qui est reçu dans la lumière oblongue lorsque le moyeu de fixation est dans sa position axiale insérée ;
-- et un tronçon de butée qui, lorsque le moyeu de fixation est dans sa position angulaire d'insertion, est apte à traverser axialement la lumière oblongue et qui, lorsque le moyeu de fixation est dans sa position angulaire de fixation, est en butée contre la face intérieure du deuxième élément pour retenir axialement le moyeu de fixation, caractérisé :
   i) en ce que le tronçon intermédiaire est de section polygonale comportant au moins :
      - une paire de côtés opposés rectilignes et parallèles qui sont séparés d'une distance sensiblement égale à ladite largeur déterminée de la lumière oblongue et qui est associée à la position angulaire d'insertion ;
      - et une autre paire consécutive de côtés opposés rectilignes et parallèles qui sont séparés d'une distance sensiblement égale à ladite largeur déterminée de la lumière oblongue et qui est associée à la position angulaire de fixation ;
   ii) et en ce que le tronçon intermédiaire est compressible radialement par déformation élastique pour permettre la passage de l'une à l'autre desdites deux positions angulaires décalées du moyeu de fixation.

Grâce à une telle conception, le montage et la fixation verrouillée du dispositif de retenue sont réalisées par une manipulation simple, en translation axiale d'insertion puis en pivotement, du moyeu de fixation, sans autre action sur un quelconque organe supplémentaire de déverrouillage.

De plus, la manipulation est particulièrement aisée car le corps du dispositif constitue une partie de préhension du dispositif par la main d'un opérateur ou par un robot de manipulation.

Selon d'autres caractéristiques du dispositif :
- chaque angle reliant deux côtés consécutifs parmi lesdits côtés comporte une portion déformable élastiquement.
- chacun desdits angles présente un profil arrondi convexe ;
- afin de conférer au moyeu de fixation une capacité de déformation radiale élastique dans la zone correspondant au tronçon intermédiaire, le dispositif comporte une série d'évidements axiaux formés dans l'épaisseur radiale du moyeu de fixation ;
- chaque évidement axial est agencé en regard de chaque angle afin de conférer à la paroi axiale périphérique cylindrique du tronçon intermédiaire une capacité à être déformée élastiquement, radialement vers ledit axe de référence, au niveau de chaque angle dans la zone correspondant au tronçon intermédiaire ;
- le contour de la paroi axiale périphérique cylindrique du tronçon intermédiaire est de forme polygonale.
- le tronçon intermédiaire est de section carrée, et la position angulaire d'insertion et la position angulaire de fixation sont décalées angulairement d'un quart de tour l'une par rapport à l'autre ;
- le tronçon de butée présente un profil oblong, complémentaire de celui de la lumière oblongue pour permettre son introduction axiale à travers la lumière oblongue, qui comporte deux ailes latérales opposées dont chacune est en butée contre une zone associée de la face intérieure pour retenir axialement le moyeu de fixation dans sa position angulaire de fixation ;
- le moyeu de fixation présente une symétrie générale de conception autour dudit axe de référence ;
- au moins le moyeu de fixation est réalisé moulé en une seule pièce en matière plastique ;
- ledit deuxième élément est une porte ou un élément de carrosserie qui est monté mobile par rapport à la caisse d'un véhicule automobile ;
- le dispositif est fixé sur une partie en forme de caisson dudit deuxième élément, et ladite face extérieure est une portion de la face extérieure de cette partie en forme de caisson ;
- l'une desdites ailes latérales opposées se prolonge par une patte latérale qui s'étend transversalement en saillie, dans un plan orthogonal à l'axe de référence du moyeu, et qui après l'introduction et verrouillage, lorsque le dispositif est fixé sur l'ouvrant, s'étend en regard d'une portion correspondante de ladite face intérieure.

### Brève description des figures

[Fig. 1] - la figure 1 est une vue en perspective d'un exemple de réalisation d'un dispositif selon l'invention sur laquelle il est représenté dans une position axiale d'insertion et dans une position angulaire d'insertion dans la lumière oblongue formée dans le deuxième élément oblongue ;
[Fig. 2] - la figure 2 est une vue en perspective selon un autre angle du dispositif illustré à la figure 1 ;
[Fig. 3] - la figure 3 est une vue analogue à celle de la figure 1 sur laquelle le dispositif est représenté dans sa position angulaire d'insertion et dans sa position axiale insérée en appui axial contre la face extérieure du deuxième élément ;
[Fig. 4] - la figure 4 est une vue une vue analogue à celle de la figure 3 sur laquelle le dispositif est représenté dans sa position angulaire de fixation sur le deuxième élément ;
[Fig.5A] - la figure 5A est une vue en coupe par un plan radial du tronçon de butée du moyeu de fixation du dispositif selon l'invention ;
[Fig.5B] - la figure 5B est une vue en coupe par un plan radial du tronçon intermédiaire du moyeu de fixation du dispositif selon l'invention ;
[Fig.5C] - la figure 5C est une vue en coupe par un plan radial du tronçon formant socle du moyeu de fixation du dispositif selon l'invention ;
[Fig. 6A] - la figure 6A est une vue latérale partielle du dispositif illustré à la figure 4 ;
[Fig. 6B] - la figure 6B est une vue d'extrémité arrière partielle du dispositif illustré à la figure 4 ;
[Fig. 7A] - la figure 7A est une vue partielle de dessous de l'ensemble représenté à la figure 3 ;
[Fig. 7B] - la figure 7B est une vue partielle de dessous de l'ensemble représenté à la figure 3, en coupe par un plan radial du tronçon intermédiaire du moyeu de fixation ;
[Fig. 7C] - la figure 7C est une vue analogue à celle de la figure 7B après pivotement de quarante-cinq degrés d'angle du moyeu de fixation par rapport au deuxième élément ;
[Fig. 7D] - la figure 7D est une vue analogue à celle de la figure 7C après un pivotement supplémentaire de quarante-cinq degrés d'angle du moyeu de fixation par rapport au deuxième élément pour occuper sa position angulaire de fixation correspondant à la configuration illustrée à la figure 4 ;
[Fig. 7E] - la figure 7E est une vue partielle de dessous de l'ensemble représenté à la figure 3 ;
[Fig. 8] - la figure 8 est une vue partielle en perspective éclatée de dessus qui illustre une variante de conception avec une patte supplémentaire de montage et de stabilisation du moyeu ;
[Fig. 9] - la figure 9 est une vue partielle en perspective de dessous qui illustre la variante de conception avec la patte supplémentaire de montage et de stabilisation du moyeu à l'issue du montage et du verrouillage.

### Description détaillée des Figures

Pour la description de l'invention et la compréhension des revendications, sans référence à la gravité terrestre et titre non limitatif, on adoptera les orientations verticale, longitudinale et transversale selon le repère V, L, T indiqué aux figures dont les axes longitudinal L et transversal T s'étendent dans un plan horizontal.

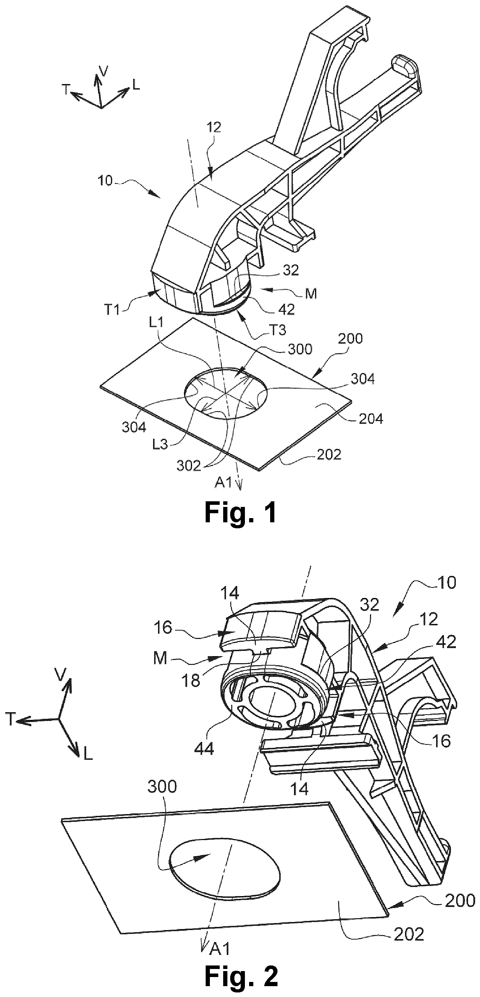

Par convention, l'axe longitudinal L est orienté de l'arrière vers l'avant, de la gauche vers la droite en considérant les figures 1 et 2.

Dans la description qui va suivre, des éléments identiques, similaires ou analogues seront désignés par les mêmes chiffres de référence.

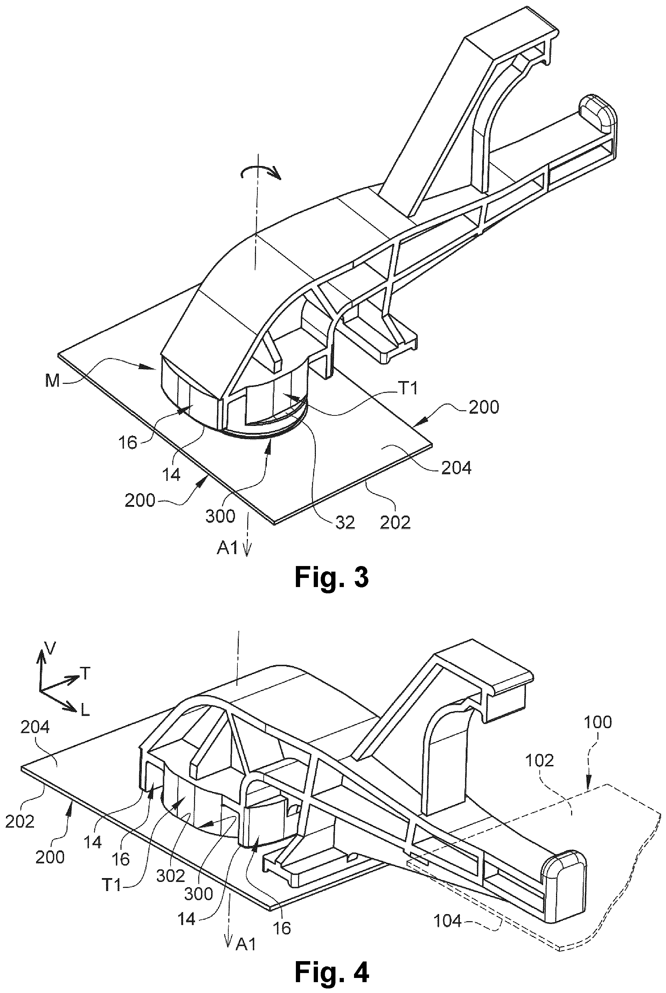

On a représenté aux figures 1 à 4 un dispositif 10 de retenue temporaire d'un ouvrant 200 par rapport à un dormant 100 (Voir figure 4).

L'ouvrant 200 est par exemple une porte appartenant à la carrosserie d'un véhicule automobile dont une portion en forme de plaque est représentée qui comporte une face extérieure 204 et une face intérieure 202.

Le dormant 100 est par exemple un élément structurel de carrosserie dont une portion de paroi est représentée qui comporte une face intérieure 102 et une face extérieure 104.

L'ouvrant 200 est monté mobile par rapport au dormant 100, ici pivotant autour d'un axe transversal d'articulation non représenté.

A titre non limitatif, le dispositif 10 présente ici une symétrie générale de conception par rapport à un plan vertical et longitudinal médian.

Le dispositif 10 comprend un corps 12 dont la partie longitudinale arrière est conçue pour permettre le montage et la fixation du dispositif 10 sur l'ouvrant 200, et dont la partie longitudinale avant est conçue pour permettre de retenir temporairement l'ouvrant 200 par des moyens, non représentés, qui sont aptes à coopérer avec le dormant 100 pour le retenir par rapport au corps 12 dans une position relative prédéfinie correspondant ici à une position de fermeture provisoire de l'ouvrant.

La partie longitudinale arrière du corps 12 est la partie de montage et de fixation du dispositif 10 sur l'ouvrant 200.

La portion en forme de plaque 200 comporte un trou traversant en forme d'une lumière oblongue 300.

La lumière oblongue 300 est notamment délimitée par deux bords longitudinaux rectilignes parallèles et opposés 302 qui sont distants transversalement l'un de l'autre d'une largeur déterminée L1.

La lumière oblongue 300 est plus longue que large. En particulier ici, il s'agit d'une lumière oblongue présentant une portion centrale « rectangulaire » de largeur L1, cette portion rectangulaire étant ici prolongée, longitudinalement de part et d'autre, par deux formes semi-circulaires concaves 304 de rayon égal à la moitié de la largeur L1 de la portion centrale rectangulaire.

La lumière oblongue 300 présente ainsi une longueur L3 supérieure à sa largeur L1.

Comme on peut le voir à la figure 4, lorsque le dispositif 10 est fixé sur l'ouvrant 200, l'orientation longitudinale des bords opposés 302 de la lumière oblongue 300 est ici parallèle à l'axe longitudinal du corps 12.

La partie longitudinale arrière de fixation comporte un moyeu M de fixation qui, depuis le corps12 et vers le bas en considérant l'axe V, s'étend selon un axe de référence A1, qui constitue aussi l'axe d'insertion du moyeu de fixation M à travers la lumière oblongue 300 et de pivotement du moyeu de fixation M par rapport à l'ouvrant 200 et donc par rapport à la lumière oblongue 300.

Le moyeu de fixation M est ici réalisée en une seule pièce par moulage en matière plastique, monobloc avec le corps 12.

Du haut vers le bas, le moyeu de fixation M comporte axialement et successivement un premier tronçon supérieur T1 formant socle, un deuxième tronçon intermédiaire T2 de verrouillage, et un troisième tronçon inférieur T3 de butée.

Sur toute sa longueur axiale, le moyeu de fixation M est de conception tubulaire et il comporte à cet effet un alésage cylindrique central 20, qui, à titre non limitatif, est de section circulaire.

De plus, afin de conférer au moyeu de fixation M une capacité de déformation radiale élastique dans la zone correspondant au tronçon intermédiaire T2, il comporte une série d'évidements axiaux 22 formés dans l'épaisseur radiale du moyeu de fixation M dont chacun présente ici une section en forme de « haricot ».

Pour des raisons liées à la technique de fabrication par moulage, comme l'alésage central 20, les évidements axiaux 22 s'étendent sur toute la longueur axiale du moyeu de fixation M et débouchent à son extrémité axiale inférieure.

Sur la longueur axiale du tronçon supérieur T1 et du tronçon intermédiaire T2, le moyeu de fixation M présente une section constante délimitée par une paroi axiale périphérique cylindrique 24 dont le contour 26 est de forme générale polygonale.

A titre non limitatif le contour 26 est ici de forme générale carrée.

Plus précisément, le contour 26 comporte :
- une paire de côtés opposés rectilignes et parallèles 28A qui sont associés à la position angulaire d'insertion du moyeu M d'insertion, et qui sont séparés d'une distance L2 légèrement inférieure à la largeur L1 de la lumière oblongue 300 ;
- et une autre paire consécutive de côtés opposés rectilignes et parallèles 28B qui sont associés à la position angulaire de fixation du moyeu M d'insertion, et qui sont séparés de la même distance L2.

Chaque angle 30 reliant deux côtés consécutifs 28A et 28B du contour 26 de forme générale carrée présente un profil convexe arrondi, ici en arc de cercle d'axe A1.

La longueur L5 de chaque diagonale du contour 26 est supérieure à la largeur L1 de la lumière oblongue 300.

Chaque évidement axial 22 est agencé en regard de chaque angle 30 afin de conférer à la paroi axiale périphérique cylindrique 24 une capacité à être déformée élastiquement, radialement vers l'axe de référence A1, au niveau de chaque angle, 30 dans la zone correspondant au tronçon intermédiaire T2.

Le tronçon supérieur T1 est de forme générale cylindrique d'axe A1 et il comporte de plus deux ailes latérales 16 parallèles et opposées d'orientation axiale, qui sont agencées longitudinalement de part et d'autre du tronçon supérieur T1.

Chaque aile latérale 16 est délimitée axialement par une face inférieure horizontale 14 d'appui.

Les deux faces d'appui 14 sont coplanaires et elles constituent la face d'appui du moyeu M, et donc du corps 12, destinée à être plaquée axialement contre une portion en vis-à-vis de la face supérieure 204 de l'ouvrant 200 lorsque le moyeu de fixation M est dans sa position axiale insérée illustrée aux figures 3 et 4.

Chaque aile latérale 16 est reliée au tronçon supérieur T1 par deux voiles axiaux de renfort 18.

Le tronçon supérieur T1 est délimité axialement vers le bas par le plan correspondant aux faces d'appui 14 au-delà desquelles le moyeu de fixation M se prolonge axialement par le tronçon intermédiaire T2 qui s'étend lui-même axialement jusqu'à une face radiale supérieure 32 du tronçon inférieur T3.

La hauteur axiale du tronçon intermédiaire est sensiblement égale à l'épaisseur de la portion de tôle du deuxième élément 200 entourant la lumière oblongue 300.

Comme expliqué précédemment, sur sa longueur axiale, le tronçon intermédiaire T2, présente une conception et des dimensions identiques à celles du tronçon supérieur T1.

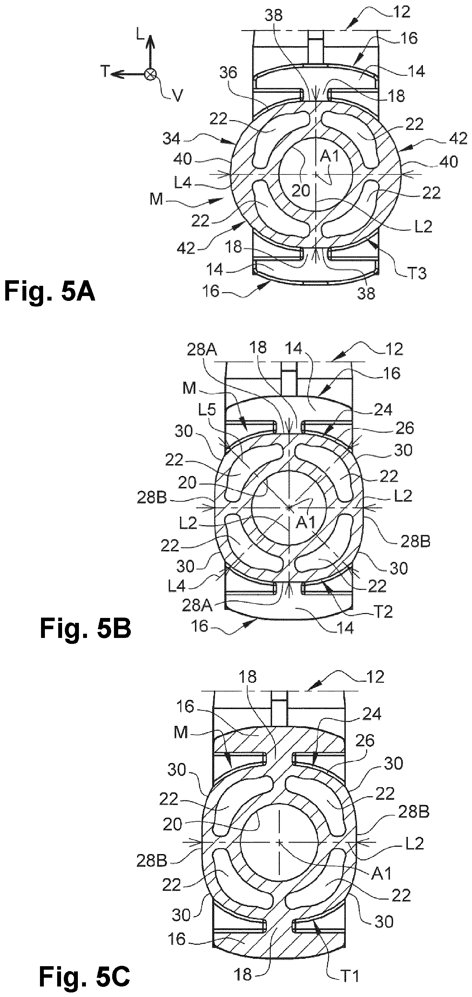

Comme on peut le voir notamment à la figure 5A, le tronçon inférieur T3 présente une section constante délimitée par une paroi axiale périphérique cylindrique 34 dont le contour 36 est de forme générale oblongue convexe sensiblement identique au contour interne concave de la lumière oblongue 300.

Notamment, le contour 36 est délimité par deux bords longitudinaux rectilignes parallèles et opposés 38 qui s'étendent dans le prolongement des côtés opposés 28A du tronçon intermédiaire T2 et qui sont distants transversalement l'un de l'autre de la largeur L2.

La portion centrale « rectangulaire » de largeur L2 du contour est prolongée, longitudinalement de part et d'autre, par deux formes semi-circulaires convexe 40 de rayon égal à la moitié de la largeur L2 de la portion centrale rectangulaire.

Le contour 36 présente ainsi une longueur L4 supérieure à sa largeur L2 et légèrement inférieure à la longueur L3 de la lumière oblongue 300.

Du fait de ces dimensions, lorsque le moyeu de fixation M est dans son orientation angulaire d'insertion illustrée aux figures 1 et 2, le tronçon inférieur T3 est apte à être inséré axialement en traversant la lumière oblongue 300 et ceci jusqu'à ce que la face radiale 14 du tronçon supérieur T1 soit en appui sur la face extérieure 204.

Du fait de ces dimensions, le tronçon inférieur T3 présente deux ailes latérales 42 diamétralement opposées.

Lorsque le moyeu de fixation M est dans son orientation angulaire de fixation illustrée aux figures, chaque aile latérale 42 est en butée axiale contre une zone en vis-à-vis de la face intérieure 202.

Le tronçon inférieur T3 est délimité axialement par sa face supérieure 32 et par sa face radiale inférieure 44 qui est aussi la face d'extrémité libre inférieure du moyeu de fixation M.

Comme on peut le voir à la figure 1, la face supérieure 32 du tronçon inférieur T3 est constituée par deux portions diamétralement opposées chacune en forme de croissant.

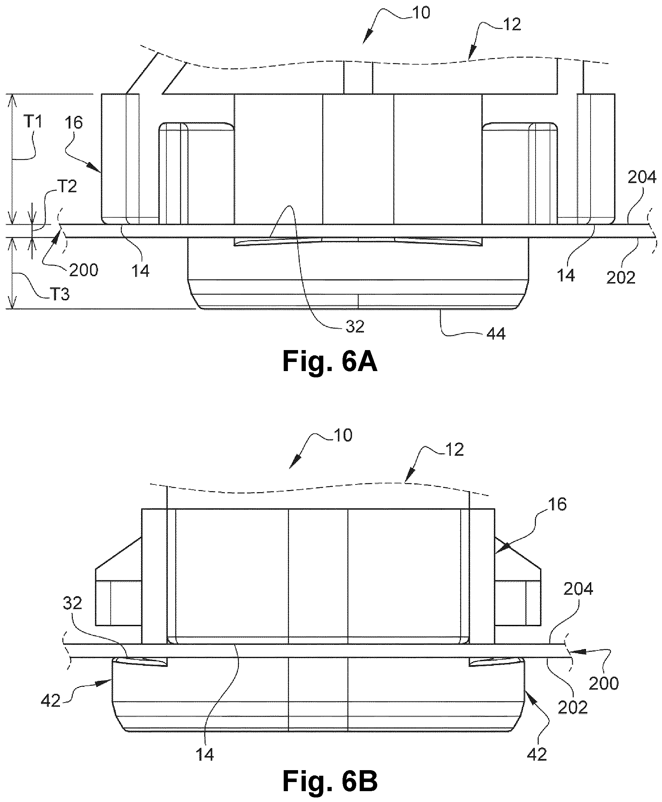

A titre non limitatif, comme on peut le voir aux figures 6A et 6B, afin de procurer un effort de serrage axial sans jeu axial de la portion 200 autour de la lumière oblongue 300, chaque portion de la face supérieure 32 présente un profil bombé.

Le montage et la fixation verrouillée du dispositif 10 sur le deuxième élément 200 s'effectue de la manière suivante.

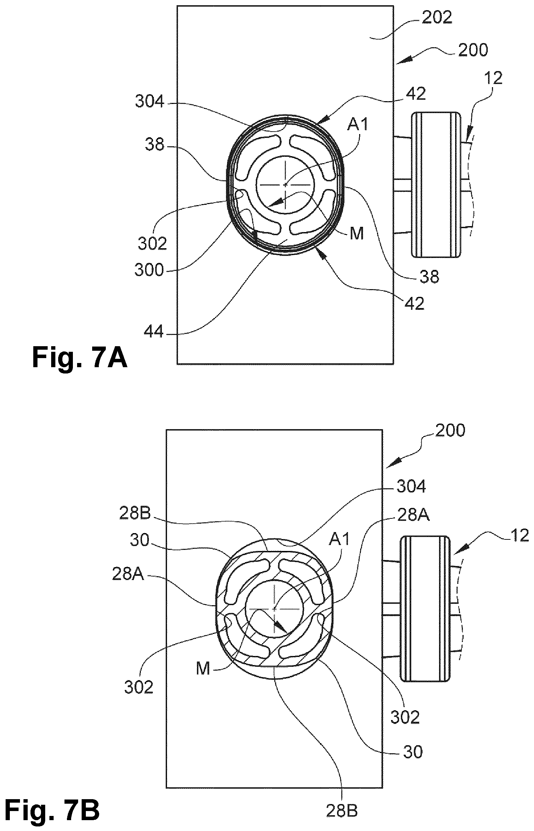

L'opérateur positionne angulairement le dispositif 10 comme illustré à la figure 1, puis il le déplace axialement vers le bas selon l'axe de référence A1 en introduisant le tronçon inférieur de butée T3 à travers la lumière oblongue 3000 puis en prolongeant le déplacement axial jusqu'à la configuration illustrée à la figure 3 et aux figures 7A et 7B.

Dans cette position, les deux faces 14 sont en appui axial sur la face supérieure 204 er la lumière oblongue 300 est positionnée axialement au droit du tronçon intermédiaire T2.

L'opérateur fait ensuite pivoter le moyeu de fixation M autour de l'axe de référence A1, dans le sens anti-horaire en considérant la figure 7B.

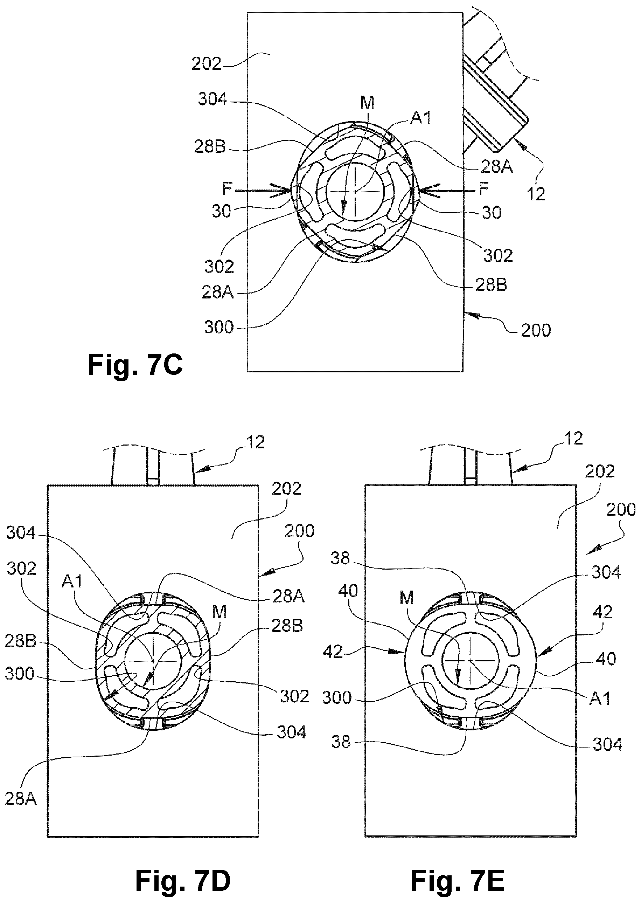

Etant donné les dimensionnements de la lumière oblongue 300 et du tronçon intermédiaire T2, l'opérateur doit appliquer un couple provoquant la déformation, radialement vers l'axe de référence A1 (Selon les flèches F de la figure 7C).

Dès que le pivotement a dépassé quarante-cinq degrés d'angle, le pivotement se poursuit avec un effet d'assistance élastique jusqu'à la position angulaire illustrée aux figures 4, 7D et 7E.

Cette position angulaire de fixation correspond à un pivotement global d'un quart de tour
- soit quatre-vingt-dix degrés d'angle - et c'est une position angulaire stable dans laquelle le moyeu est verrouillé angulairement par coopérations de formes.

Comme on peut le voir à la figure 7E, les ailes latérales 42 avec leurs surfaces bombées 32 s'étendent en regard de portions en vis-à-vis de la face intérieure 202 et le troisième tronçon T3 remplit sa fonction de butée axiale du moyeu de fixation M empêchant son extraction axiale.

Le déverrouillage et le démontage s'effectue de manière inverse.

Le contour 26 est de forme générale polygonale est ici forme générale carrée et il est associé à un montage « quart de tour ».

Sans sortir du cadre de l'invention, la section polygonale peut par exemple être hexagonale associée à un montage « un 6^{éme} de tour» soit 60 degrés d'angle de pivotement.

L'invention a été décrite selon un exemple dans lequel le dispositif 10 est fixé sur un ouvrant et est apte à coopérer avec une portion d'un dormant.

De manière symétrique, l'invention trouve à s'appliquer en fixant le dispositif 10 sur un dormant pour coopérer avec une portion d'un ouvrant.

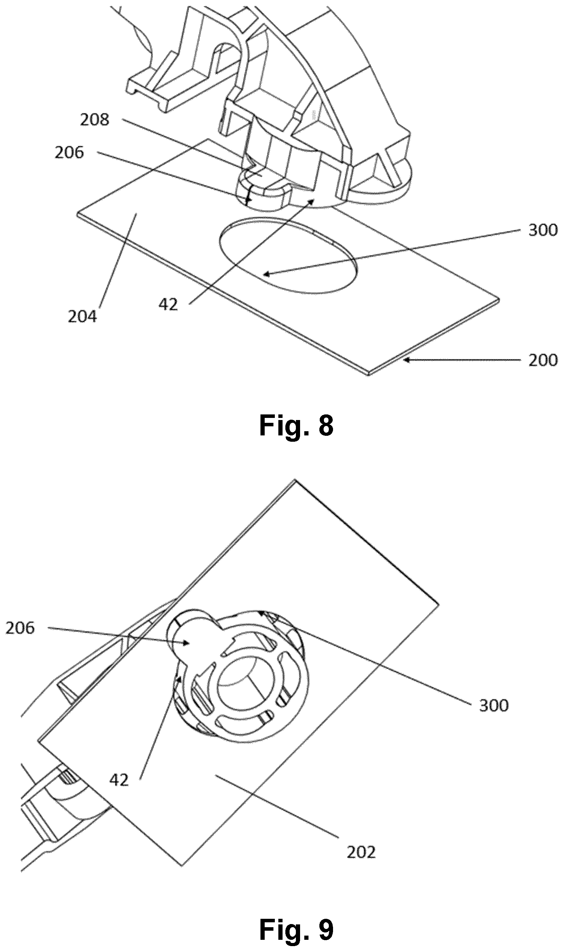

On décrira maintenant la variante illustrée aux figures 8 et 9.

Comme indiqué précédemment, le tronçon inférieur T3 présente deux ailes latérales 42 diamétralement opposées et lorsque le moyeu de fixation M est dans son orientation angulaire de fixation illustrée aux figures, chaque aile latérale 42 est en butée axiale contre une zone en vis-à-vis de la face intérieure 202.

Selon la variante, le moyeu comporte une patte ou oreille latérale 206 qui s'étend transversalement en saillie, dans le plan horizontal L, T, à partir d'une des ailes latérales 42.

Cette patte latérale 206 qui prolonge latéralement le tronçon inférieur T3 du moyeu permet de faciliter l'introduction du moyeu dans la lumière oblongue 300.

De plus, après l'introduction et verrouillage, lorsque le dispositif 10 est fixé sur l'ouvrant 200, la face supérieure 208 de la patte 206 s'étend en regard d'une portion correspondante de la face intérieure 202 et elle améliore la répartition des efforts sous charge qui sont appliqués à la portion de l'ouvrant 200 comportant la lumière 300.

## Revendications

1. Dispositif (10) pour la retenue temporaire d'un deuxième élément (200) d'un véhicule automobile monté mobile par rapport à un premier élément (100) de ce véhicule automobile, le deuxième élément (200) comprenant une paroi comportant une face intérieure (202) et une face extérieure (204) et une lumière oblongue (300) délimitée par deux bords rectilignes parallèles (302) distants transversalement d'une largeur déterminée (L1), le dispositif (10) comportant :- un corps (12) comportant des moyens de retenue du deuxième élément ; et
- un moyeu (M) de fixation de forme allongée qui s'étend depuis le corps (12), qui, selon un axe (A1) de référence, est apte à être introduit axialement à travers la lumière oblongue (300) pour occuper une position axiale insérée dans laquelle le moyeu (M) de fixation est apte à pivoter autour dudit axe de référence (A1) entre une position angulaire d'insertion et une position angulaire de fixation qui sont décalées angulairement l'une par rapport à l'autre,
ce moyeu (M) de fixation comportant axialement et successivement :
-- un tronçon formant socle (T1) qui est apte à venir en appui axial contre la face extérieure (204) du deuxième élément (200) lorsque le moyeu (M) de fixation est dans sa position axiale insérée ;
-- un tronçon intermédiaire (T2) qui est reçu dans la lumière oblongue (300) lorsque le moyeu (M) de fixation est dans sa position axiale insérée ;
-- et un tronçon de butée (T3) qui, lorsque le moyeu (M) de fixation est dans sa position angulaire d'insertion, est apte à traverser axialement la lumière oblongue (300) et qui, lorsque le moyeu (M) de fixation est dans sa position angulaire de fixation, est en butée contre la face intérieure (202) du deuxième élément (200) pour retenir axialement le moyeu (M) de fixation,
**caractérisé :**
i) **en ce que** le tronçon intermédiaire (T2) est de section polygonale comportant au moins :
- une paire de côtés opposés rectilignes et parallèles qui sont séparés d'une distance (L2) sensiblement égale à ladite largeur déterminée (L1) de la lumière oblongue et qui est associée à la position angulaire d'insertion ;
- et une autre paire consécutive de côtés opposés rectilignes et parallèles qui sont séparés d'une distance sensiblement égale à ladite largeur déterminée (L1) de la lumière oblongue (300) et qui est associée à la position angulaire de fixation ;
ii) et **en ce que** le tronçon intermédiaire (T2) est compressible radialement par déformation élastique pour permettre la passage de l'une à l'autre desdites deux positions angulaires décalées du moyeu (M) de fixation.

2. Dispositif (10) selon la revendication 1, **caractérisé en ce que**, chaque angle (30) reliant deux côtés consécutifs (28A-28B) parmi lesdits côtés comporte une portion déformable élastiquement.

3. Dispositif (10) selon la revendication 2, **caractérisé en ce que** chacun desdits angles (30) présente un profil arrondi convexe.

4. Dispositif (10) selon l'une des revendications 2 ou 3, **caractérisé en ce que**, afin de conférer au moyeu de fixation (M) une capacité de déformation radiale élastique dans la zone correspondant au tronçon intermédiaire (T2), il comporte une série d'évidements axiaux (22) formés dans l'épaisseur radiale du moyeu de fixation (M).

5. Dispositif (10) selon la revendication précédente, **caractérisé en ce que** chaque évidement axial (22) est agencé en regard de chaque angle (30) afin de conférer à la paroi axiale périphérique cylindrique (24) du tronçon intermédiaire (T2) une capacité à être déformée élastiquement, radialement vers ledit axe de référence (A1), au niveau de chaque angle (30) dans la zone correspondant au tronçon intermédiaire (T2).

6. Dispositif (10) selon la revendication précédente, **caractérisé en ce que** le contour (26) de la paroi axiale périphérique cylindrique (24) du tronçon intermédiaire (T2) est de forme polygonale.

7. Dispositif (10) selon l'une quelconque des revendications précédentes, **caractérisé en ce que** le tronçon intermédiaire (T2) est de section carrée, et **en ce que** la position angulaire d'insertion et la position angulaire de fixation sont décalées angulairement d'un quart de tour l'une par rapport à l'autre.

8. Dispositif (10) selon la revendication 1, **caractérisé en ce que** le tronçon (T3) de butée présente un profil oblong, complémentaire de celui de la lumière oblongue (300) pour permettre son introduction axiale à travers la lumière oblongue (300), qui comporte deux ailes latérales opposées (42) dont chacune est en butée contre une zone associée de la face intérieure (202) pour retenir axialement le moyeu (M) de fixation dans sa position angulaire de fixation.

9. Dispositif (10) selon l'une quelconque des revendications précédentes, **caractérisé en ce que** le moyeu (M) de fixation présente une symétrie générale de conception autour dudit axe de référence.

10. Dispositif (10) selon l'une quelconque des revendications précédentes, **caractérisé en ce que** au moins le moyeu (M) de fixation est réalisé moulé en une seule pièce en matière plastique.

11. Dispositif (10) selon l'une quelconque des revendications précédentes, caractérisé en ce ledit deuxième élément est une porte ou un élément de carrosserie qui est monté mobile par rapport à la caisse d'un véhicule automobile.

12. Dispositif (10) selon la revendication précédente, **caractérisé en ce qu'**il est fixé sur une partie en forme de caisson dudit deuxième élément, et **en ce que** ladite face extérieure est une portion de la face extérieure de cette partie en forme de caisson.

13. Dispositif selon la revendication 8, **caractérisé en ce que** l'une desdites ailes latérales opposées (42) se prolonge par une patte latérale (206) qui s'étend transversalement en saillie, dans un plan orthogonal à l'axe (A1) de référence du moyeu (M), et qui après l'introduction et verrouillage, lorsque le dispositif (10) est fixé sur l'ouvrant (200), s'étend en regard d'une portion correspondante de ladite face intérieure (202).
